# EUROPÄISCHE PATENTSCHRIFT

(11) **EP 1 175 252 B1**
(45) Veröffentlichungstag und Bekanntmachung des Hinweises auf die Patenterteilung: **15.01.2003**
(21) Anmeldenummer: 00910873.9
(22) Anmeldetag: 22.03.2000
(51) Int. Cl.: B01D 53/94, F01N 3/08

(54) **ANORDNUNG ZUR REINIGUNG EINES ABGASES EINER VERBRENNUNGSKRAFTMASCHINE UND VERFAHREN ZUM BETRIEB EINER SOLCHEN ANORDNUNG**
SYSTEM FOR PURIFYING EXHAUST GASES OF AN INTERNAL COMBUSTION ENGINE AND METHOD FOR OPERATING SUCH A SYSTEM
INSTALLATION POUR NETTOYER LES GAZ D'ECHAPPEMENT ISSUS D'UN MOTEUR A COMBUSTION INTERNE ET PROCEDE POUR FAIRE FONCTIONNER UNE TELLE INSTALLATION

(30) Priorität: 24.04.1999 DE 19918756
(43) Veröffentlichungstag der Anmeldung: 30.01.2002
(73) Patentinhaber: Volkswagen Aktiengesellschaft, 38436 Wolfsburg (DE)
(72) Erfinder: POTT, Ekkehard, D-38518 Gifhorn (DE)
(74) Vertreter: Schneider, Henry, Dipl.-Ing.
(86) Internationale Anmeldenummer: EP0002525
(87) Internationale Veröffentlichungsnummer: WO00064566

(56) Entgegenhaltungen:
- EP-A- 0 629 771
- EP-A- 0 749 774
- EP-A- 0 814 242
- EP-A- 0 893 154

## Beschreibung

Die Erfindung betrifft eine Anordnung zur Reinigung eines Abgases einer Verbrennungskraftmaschine, insbesondere von Kraftfahrzeugen, und ein Verfahren zum Betrieb einer solchen Anordnung mit den im Oberbegriff der Ansprüche 1 beziehungsweise 12 genannten Merkmalen.

Es ist bekannt, Katalysatorsysteme in einem Abgaskanal einer Verbrennungskraftmaschine anzuordnen, die eine Reinigung des Abgases der Verbrennungskraftmaschine ermöglichen. Dabei werden in erster Linie umweltrelevante Abgasbestandteile, wie CO, CH oder NOₓ, in weniger schädliche Reaktionsprodukte umgewandelt. Infolge sich verschärfender gesetzlicher Normen hinsichtlich dieser Abgasbestandteile ist eine weitere Reduzierung, insbesondere der NOₓ-Emissionen, erwünscht.

Ein Betriebsmodus der Verbrennungskraftmaschine kann unter anderem durch ein Verhältnis einer Sauerstoffkonzentration zu einer Brennstoffgemischkonzentration beschrieben werden. Dabei spiegelt ein sogenannter Lambdawert die stöchiometrischen Verhältnisse dieser beiden Komponenten wieder. Bei Lambdawerten < 1 übersteigt die Konzentration des Brennstoffgemisches die Konzentration des Sauerstoffes, und infolge dessen ist der Anteil reduktiver Komponenten, wie CH und CO, im Abgas erhöht (Lambda < 1 = fettes Gemisch). Ist dagegen die Konzentration des Sauerstoffs größer als die Konzentration des Brennstoffgemisches, so ist Lambda > 1 (mageres Gemisch). Ist die Sauerstoffkonzentration überverhältnismäßig erhöht, so kann in einem vermehrten Maße die NOₓ-Konzentration steigen.

CO und CH können durch Oxidation in Kohlendioxid und Wasser umgewandelt werden, wobei eine solche Umsetzung durch geeignete Katalysatoren unterstützt werden kann. Auf der anderen Seite ist bekannt, NOₓ in reduktiver Atmosphäre an geeigneten Katalysatoren wieder zu Stickstoff zu reduzieren. Solche Katalysatorsysteme können auch zusammengefaßt werden und bilden dann sogenannte 3-Wege-Katalysatoren. Ein optimaler Betriebsmodus eines solchen 3-Wege-Katalysators hinsichtlich des Abbaues von CO, CH und NOₓ ist in der Praxis allerdings nur bei Lambda ≈ 1 möglich.

Im Zuge einer Entwicklung und Optimierung des Brennverfahrens von Otto-Motoren, insbesondere durch eine direkte Einspritzung, ist dagegen ein Betrieb der Verbrennungskraftmaschine in magerer Atmosphäre erwünscht. Es ist bekannt, unter diesen Bedingungen dem Katalysatorsystem geeignete NOₓ-Absorber zuzuordnen, die gegebenenfalls auch als Katalysatoren dienen können (NOₓ-Speicherkatalysatoren).

Während eines Betriebes der Verbrennungskraftmaschine in magerer Atmosphäre wird demnach das entstehende NOₓ in dem NOₓ-Speicherkatalysator eingelagert. Dabei findet die Absorption ihre Beschränkung in einem absoluten Speichervolumen des NOₓ-Speicherkatalysators. Es muß daher in bestimmten Zeitabständen unter stöchiometrischer oder fetter Atmosphäre (Lambda ≤ 1) eine Reduktion des gespeicherten NOₓ erfolgen (Regeneration). Das Speichervermögen eines NOₓ-Speicherkatalysators ist zudem temperaturabhängig. Das heißt, oberhalb einer Desorptionstemperatur erfolgt wieder eine Abgabe des NOₓ (auch in magerer Atmosphäre). Somit muß die Verbrennungskraftmaschine nach dem Erreichen oder Überschreiten der Desorptionstemperatur wieder unter fetter Atmosphäre betrieben werden. Demnach wäre eine motorferne Anordnung des NOₓ-Speicherkatalysators bevorteilt. Insbesondere wäre dadurch auch eine thermische Alterung des Katalysators gemindert. Andererseits ist eine motornahe Anordnung des NOₓ-Speicherkatalysators günstig, um ein rasches Anspringen des Katalysators zu ermöglichen, da dieser erst in einem Temperaturbereich von zirka 250 bis 500 °C eine ausreichende Aktivität aufweist.

Weiterhin ist durch die motornahe Anordnung eine schnellere Entschwefelung des Katalysatorsystems möglich. Viele bekannte Brennstoffgemische beinhalten Schwefel in bestimmten Anteilen. Infolge einer allmählichen Einlagerung des Schwefels in das Katalysatorsystems verringert sich dessen NOₓ-Umsatzvermögen. Es ist bekannt, das Katalysatorsystem durch eine Temperaturerhöhung zu entschwefeln. Dabei ist ein motornahes Katalysatorsystem bevorzugt, um einen Wärmeverlust im Abgaskanal und infolgedessen einen höheren Kraftstoffverbrauch zu vermeiden. In der Praxis ist der Abstand des NOₓ-Speicherkatalysators von der Verbrennungskraftmaschine daher ein Kompromiß zwischen diesen widerstrebenden Anforderungen und führt dazu, daß die Verbrennungskraftmaschine relativ häufig unter fetter Atmosphäre betrieben werden muß, obwohl auf Seiten der Verbrennungskraftmaschine noch ein Betrieb unter magerer Atmosphäre möglich wäre.

Weiterhin ist nachteilig, daß sich der NOₓ-Speicherkatalysator nach dem Erwärmen über die Desorptionstemperatur nur sehr langsam abkühlt, da das Abgas bei λ ≈ 1 höhere Temperaturen als bei λ > 1 aufweist. Eine Rückführung in den mageren Arbeitsmodus ist daher erschwert.

Die EP-A-0.749.774 beschreibt eine Anordnung zur Reinigung eines Abgases einer Verbrennungskraftmaschine mit einem Katalysatorsystem zur Reduzierung des Stickstoffoxidanteils des Abgases. Das Katalysatorsystem umfaßt im Strömungszug des Abgases einen ersten NOₓ- Speicherkatalysator und beabstandet zu diesem einen zweiten NOₓ- Speicherkatalysator. Ein Vorkatalysator kann dem ersten NOₓ-Speicherkatalysator zugeordnet sein.

Die EP-A-0.814.242 offenbart ein Katalysatorsystem mit einem ersten Speicherkatalysator für SOₓ und beabstandet zu diesem einen zweiten Speicherkatalysator für NOₓ. In diesem Dokument wird beschrieben, in welchem Abstand die beiden Speicherkomponenten anzuordnen sind.

Der Erfindung liegt die Aufgabe zugrunde, ein Katalysatorsystem zur Verfügung zu stellen, das den Betrieb der Verbrennungskraftmaschine in magerer Atmosphäre in einem wesentlich größeren Umfang ermöglicht, ohne daß störende NOₓ-Emissionen in Kauf genommen werden müssen.

Erfindungsgemäß wird diese Aufgabe gelöst durch eine Anordnung zur Reinigung eines Abgases einer Verbrennungskraftmaschine, insbesondere in Kraftfahrzeugen, mit einem in einem Abgaskanal angeordneten Katalysatorsystem mit den Merkmalen des Anspruchs 1 und durch ein Verfahren zum Betrieb einer solchen Anordnung. Dadurch, daß das Katalysatorsystem im Strömungszug des Abgases einen ersten NOₓ-Speicherkatalysator und beabstandet zu diesem einen zweiten NOₓ-Speicherkatalysator umfaßt, ist es möglich, die Verbrennungskraftmaschine wesentlich länger in einem Betriebsmodus unter magerer Atmosphäre zu belassen.

In einer bevorzugten Ausführungsform beinhaltet ein solches Katalysatorsystem zusätzlich Katalysatoren, die eine Oxidation der reduktiven Komponenten CO und CH ermöglichen. Diese können mit einem NOₓ-Katalysator als 3-Wege-Katalysatoren zusammengefaßt werden. In bevorzugter Ausführungsform wird ein solcher 3-Wege-Katalysator zusätzlich motornah in dem Abgaskanal integriert, so daß in diesem Falle das Katalysatorsystem insgesamt drei Katalysatoren umfaßt. Dabei sind die beiden im Strömungszug des Abgases nachgeordneten Katalysatoren als NOₓ-Speicherkatalysatoren ausgelegt. Durch eine solche Anordnung werden im Bereich des motornahen 3-Wege-Katalysators die reduktiven Gaskomponenten (CO, CH) oxidiert. Unter mageren Bedingungen passiert NOₓ weitestgehend den 3-Wege-Katalysator und wird in dem ersten NOₓ-Speicherkatalysator absorbiert. Durch die vorherige Oxidation der reduktiven Gaskomponenten kann deren konkurrierende Einlagerung in den NOₓ-Speicherkatalysator vermieden werden.

Dere zweite NOₓ-Speicherkatalysator ist in seiner Zusammensetzung derart modifiziert, daß er entsprechend den niedrigeren Temperaturen des Abgases (durch die motorferne Anordnung) optimiert ist. Dies beinhaltet, daß der erste und der zweite NOₓ-Speicherkatalysator verschiedenartig ausgelegt sind. So kann beispielsweise ein verschiedenartiges Trägermaterial eine unterschiedliche Temperaturstabilität gewähren oder die Wahl des Absorbens für das NOₓ hinsichtlich der Desorptionstemperatur variiert werden. Auf diese Weise werden wesentlich niedrigere Entschwefelungstemperaturen des zweiten NOₓ-Speicherkatalysators als bei dem ersten NOₓ-Speicherkatalysator ermöglicht.

Weiterhin ist bevorzugt, eine Entschwefelung des Katalysatorsystems in besonderer Weise zu steuern. Zur Steuerung und Überwachung umfaßt das Katalysatorsystem zusätzliche Sensorelemente, beispielsweise NOₓ-und/oder Lambdasonden (zum Beispiel Breitband- oder Sprungantwort-Lambda-Sonden) und Temperaturfühler, die eine Erfassung bestimmter Betriebsparameter in ausgewählten Bereichen des Katalysatorsystems ermöglichen. Diese Betriebsparameter werden dann in bekannter Weise an ein Motorsteuergerät übermittelt und ausgewertet. Durch das Motorsteuergerät kann dann gegebenenfalls die Zusammensetzung des Brennstoff-Luft-Gemisches reguliert werden. Steht der zweite NOₓ-Speicherkatalysator unter magerer Atmosphäre, so besteht bei der Entschwefelung des ersten NOₓ-Speicherkatalysators die Gefahr, daß der Schwefel in den zweiten NOₓ-Speicherkatalysator eingelagert wird. Durch zwei spezielle Betriebsmodi, die mit Hilfe der Sensor- und Steuerelemente gesteuert werden können, kann dies wirkungsvoll verhindert werden.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Schnittansicht durch ein Katalysatorsystem für eine Verbrennungskraftmaschine;
- Figur 2: eine schematische Illustration der NOₓ-Absorption und NOₓ-Reduktion in einem NOₓ-Speicherkatalysator und
- Figur 3: eine schematische Illustration eines Schwefelab- und -desorptionsprozesses.

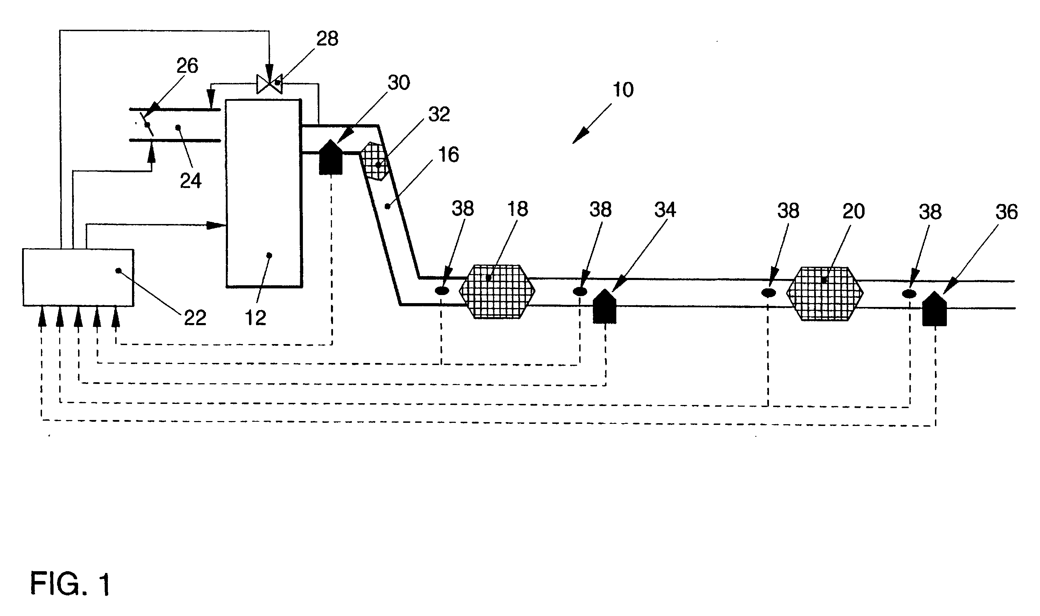

Die Figur 1 zeigt eine Anordnung eines Katalysatorsystems 10 zur Reinigung eines Abgases einer Verbrennungskraftmaschine 12. Dabei ist das Katalysatorsystem 10 innerhalb eines Abgaskanals 16 angeordnet. Das Katalysatorsystem 10 umfaßt einen ersten NOₓ-Speicherkatalysator 18 und einen zweiten NOₓ-Speicherkatalysator 20.

Die Verbrennungskraftmaschine 12 kann hinsichtlich eines Verhältnisses einer Sauerstoffkonzentration zu einer Konzentration eines Brennstoffgemisches in insgesamt drei verschiedenen Betriebsmodi betrieben werden. Ein jeweiliger Betriebsmodus kann durch einen Lambdawert charakterisiert werden. Liegt Sauerstoff in einem stöchiometrischen Überschuß vor, so ist Lambda > 1 (magere Atmosphäre). Besteht ein stöchiometrischer Unterschuß an Sauerstoff, so ist Lambda < 1 (fette Atmosphäre) und im stöchiometrischen Gleichgewicht ist Lambda = 1.

Eine Regulation des Betriebsmodus der Verbrennungskraftmaschine 12 kann in bekannter Weise über ein Motorsteuergerät 22 erfolgen. Dabei kann entsprechend eines gewünschten Betriebsmodus beziehungsweise einer Leistungsanforderung an die Verbrennungskraftmaschine 12 der Sauerstoffgehalt vor einer Verbrennung reguliert werden. Zum einen kann ein Luftstrom innerhalb eines Saugrohres 24 durch eine Drosselklappe 26 in seinem Volumenstrom gesteuert werden, und zum anderen kann über ein Abgasrückführventil 28 gegebenenfalls Abgas (und damit sauerstoffarme Luft) in das Saugrohr 24 eingebracht werden. Die Zusammensetzung des Abgases kann durch ein Gassensorelement 30 überwacht werden. Eine solche Regulierung ist bekannt und soll daher im Rahmen dieser Beschreibung nicht näher erläutert werden.

Wird die Verbrennungskraftmaschine 12 in einem Betriebsmodus mit Lambda < 1 betrieben (fette Atmosphäre), so treten in dem Abgas vermehrt reduktive Gaskomponenten, wie CO und CH, auf. Diese sollen aufgrund ihrer umweltschädigenden Eigenschaften nachfolgend in dem Katalysatorsystem 10 entfernt werden. Neben diesen reduktiven Gaskomponenten wird während eines Verbrennungsvorganges NOₓ gebildet und zwar vermehrt, wenn sich die Verbrennungskraftmaschine 12 in einem mageren Betriebsmodus befindet (Lambda > 1). Auch diese Schadstoffkomponente soll durch das Katalysatorsystem 10 abgebaut werden.

Gemäß dem Ausführungsbeispiel der Figur 1 umfaßt das Katalysatorsystem 10 zusätzlich einen Vorkatalysator 32, der motornah angeordnet ist. Der Vorkatalysator 32 ist vorteilhafterweise ein 3-Wege-Katalysator. Ferner umfaßt das Katalysatorsystem 10 auch drei Gassensorelemente 30, 34, 36, die zur Erfassung der Konzentration einzelner Gaskomponenten dienen, sowie mehrere Temperaturfühler 38. Die Gassensorelemente 30, 34, 36 sind in bevorzugter Weise Lambdasonden oder NOₓ-Sensoren.

Eine Funktionsweise des Katalysatorsystems 10 in verschiedenen, in der Praxis auftretenden Betriebssituationen wird nachfolgend näher erläutert:

Nach einem Kaltstart wird zunächst der Vorkatalysator 32 aufgrund seiner motornahen Anordnung auf eine notwendige Betriebstemperatur (aktiver Temperaturbereich) erwärmt. Die Erwärmung kann beispielsweise durch Maßnahmen wie Spätzündungen, Nacheinspritzungen oder dergleichen unterstützt werden. Der Vorkatalysator 32 beinhaltet aktive Katalysatorkomponenten, wie beispielsweise Edelmetalle, die eine Oxidation der reduzierenden Gaskomponenten CO und CH unterstützen. Weiterhin kann er weitere Katalysatorkomponenten aufweisen, die eine Reduktion von NOₓ erleichtern. Ein solcher Vorkatalysator 32 ist dann ein 3-Wege-Katalysator. Eine NOₓ-Reduktion kann allerdings nur in Bereichen, in denen Lambda ≤ 1 ist, stattfinden.

Wird die Verbrennungskraftmaschine 12 in einem mageren Betriebsmodus betrieben, so ist es demzufolge nicht möglich, NOₓ in ausreichendem Maße zu reduzieren. Aus diesem Grunde ist dem Vorkatalysator 32 der NOₓ-Speicherkatalysator 18 nachgeordnet. NOₓ-Speicherkatalysatoren 18, 20 beinhalten neben den die Reduktion unterstützenden Katalysatorkomponenten Speicherelemente für NOₓ (Absorbens). Solange Lambda > 1 ist, wird NOₓ sorbiert, bis ein gegebenes Speichervolumen überschritten wird. Kurz vor diesem Zeitpunkt muß daher der Betriebsmodus in Lambda ≤ 1 gewechselt werden, wobei dann eine Reduktion des gespeicherten NOₓ an den Katalysatorkomponenten stattfindet (Regeneration).

Der erste NOₓ-Speicherkatalysator 18 wird in bevorzugter Weise zirka 250 bis 1000 mm stromab des Vorkatalysators 32 angeordnet. Der zweite NOₓ-Speicherkatalysator 20 wiederum ist bevorzugt 300 bis 1500 mm stromab von dem ersten NOₓ-Speicherkatalysator 18 entfernt. Aufgrund der unterschiedlichen Entfernungen der einzelnen Katalysatoren 18, 20, 32 von der Verbrennungskraftmaschine 12 weisen diese einen erheblichen Temperaturgradienten auf.

In einem Bereich einer Abgastemperatur bis zirka 500 °C an dem ersten NOₓ-Speicherkatalysator 18 erfolgt ein Abbau der umweltrelevanten Emissionen durch den NOₓ-Speicherkatalysator 18 und den Vorkatalysator 32. Geringe NOₓ-Durchbrüche können durch den zweiten NOₓ-Speicherkatalysator 20 aufgefangen werden, so daß bereits hier deutlich niedrigere NOₓ-Emissionen verwirklicht werden können.

Eine Speicherung von NOₓ in NOₓ-Speicherkatalysatoren 18, 20 ist allerdings nur bis zu einer Desorptionstemperatur (hier zirka 500 °C für den ersten NOₓ-Speicherkatalysator 18) möglich. Oberhalb der Desorptionstemperatur wird das NOₓ wieder freigegeben. Daher muß bei einem Betrieb mit nur einem NOₓ-Speicherkatalysator vor Erreichen der Desorptionstemperatur wieder in einen fetten Arbeitsmodus gewechselt werden. Dies führt zu einem erhöhten Kraftstoffverbrauch sowie zu einem geringeren Wirkungsgrad der Verbrennungskraftmaschine 12.

Dagegen wird nach der erfindungsgemäßen Anordnung ein Betrieb der Verbrennungskraftmaschine 12 in einem mageren Arbeitsmodus nach dem Überschreiten der Desorptionstemperatur am ersten NOₓ-Speicherkatalysator 18 weiterhin ermöglicht. Das NOₓ wird in diesem Fall im zweiten NOₓ-Speicherkatalysator 20 absorbiert.

Die Verbrennungskraftmaschine 12 kann dann solange in einem mageren Arbeitsmodus betrieben werden, bis auch am zweiten NOₓ-Speicherkatalysator 20 die Desorptionstemperatur überschritten wird oder dessen Speichervolumen erschöpft ist. Selbstverständlich müssen bei der Regeneration der NOₓ-Speicherkatalysatoren 18, 20 die teils längeren Abgaswege sowie eine Sauerstoffspeicherfähigkeit der Katalysatoren 18, 20, 32 durch Anpassung der Regenerationszeiten und/oder eines Regenerationsschwellenwertes für Lambda berücksichtigt werden.

Während eines Schwachlastbetriebes (Abgastemperatur < 450 °C) der Verbrennungskraftmaschine 12 kann dann wieder eine Abkühlung des Katalysatorsystems 10 erfolgen, wobei aufgrund der motorfemen Anordnung des NOₓ-Speicherkatalysators 20 dieser wieder sehr schnell die Desorptionstemperatur unterschreitet und infolge dessen wieder ein magerer Arbeitsmodus ermöglicht wird. Ein Abkühlen des Katalysatorsystems 10 wird dann noch dadurch unterstützt, daß die Abgastemperatur in Bereichen Lambda > 1 geringer ist als beim Betrieb bei Lambda = 1. Somit ist eine Rückführung in den mageren Arbeitsmodus erleichtert.

Die beiden NOₓ-Speicherkatalysatoren 18, 20 sind verschiedenartig ausgelegt, in Hinsicht auf die Desorptionstemperatur, Speichervolumen, Temperaturbeständigkeit oder ihrem aktiven Temperaturbereich.

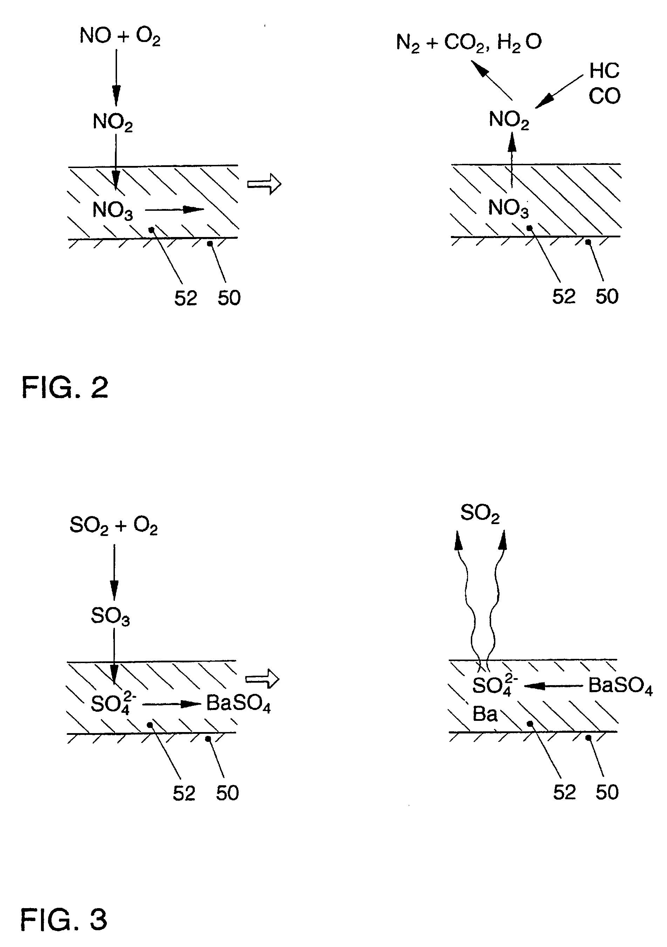

Die ablaufenden Prozesse werden nachfolgend anhand der Figur 2 kurz illustriert. So bestehen NOₓ-Speicherkatalysatoren 18, 20 üblicherweise aus einem Träger 50, auf dem eine aktive Schicht 52 aufgebracht ist. Der Träger 50 kann aus hochschmelzenden Metalloxiden, wie beispielsweise Aluminiumoxid, Zirkoniumoxid oder dergleichen, bestehen. Die Schicht 52 enthält in homogener oder heterogener Verteilung das Absorbens und die Katalysatorkomponenten. Als Absorbens kann beispielsweise Bariumoxid dienen, während zur Gewährung hinreichender katalytischer Aktivität beispielsweise Edelmetalle, wie Platin, Palladium, Rhodium oder auch Seltenerdenmetalle, eingesetzt werden. Durch geeignete Selektion der einzelnen Bestandteile eines solchen NOₓ-Speicherkatalysators werden so die gewünschten Eigenschaften, wie Temperaturbeständigkeit, aktiver Temperaturbereich, Desorptionstemperatur oder Speichervolumen, vorgegeben. Der aktive Temperaturbereich sowie die Desorptionstemperatur für NOₓ, SO₂ des zweiten NOₓ-Speicherkatalysators 20 liegen niedriger als die des ersten NOₓ-Speicherkatalysators 18. Selbstverständlich können physikalische Größen, wie Anzahl an Zellen oder Wandstärke, variiert werden.

In einem mageren Arbeitsmodus wird NO katalytisch durch Sauerstoff in NO₂ oxidiert und in Form von Nitrat in der Schicht 52 gespeichert (Chemiesorption). Ist Lambda ≤ 1 wird Nitrat wieder in NO₂ umgewandelt und durch die reduzierenden Gaskomponenten HC und CO in Stickstoff und Kohlendioxid und Wasser umgewandelt.

Entscheidend für eine Langzeitaktivität des Katalysatorsystems 10 ist jedoch eine hinreichende Entschwefelung. Schwefel ist Bestandteil in vielen Kraftstoffen. Während eines Verbrennungsvorganges im Verbrennungsmotor 12 entsteht dabei SO₂, das in magerer Atmosphäre durch Sauerstoff zu SO₃⁻ und anschließend als Sulfat in der Schicht 52 gebunden wird (Figur 3). Dies führt zum einen zu verstärkten Alterungsprozessen mit Rißbildung, und zum anderen wird dadurch eine aktive Oberfläche verringert. Durch Ausheizen des Katalysators in stöchiometrischer oder fetter Atmosphäre kann das Sulfat wieder zu SO₂ reduziert werden (Entschwefelung/Sulfatzerfall).

In dem Fall, daß der erste NOₓ-Speicherkatalysator 18 jedoch nach dem Wechseln des Arbeitsmodus unter fetter Atmosphäre steht und der zweite NOₓ-Speicherkatalysator 20 sich noch in einem mageren Arbeitsmodus befindet, kann somit die Gefahr bestehen, daß der zweite NOₓ-Speicherkatalysator 20 schwefelvergiftet wird. Dies kann auf zweierlei Weise verhindert werden. Zum einen wird zunächst nur auf einen Lambdawert knapp unter 1 angefettet (0,985 bis 0,995), und zwar solange, bis auch der zweite NOₓ-Speicherkatalysator 20 vollständig mit sauerstoffarmen Abgas durchströmt ist, was durch das Gassensorelement 36 erfaßt werden kann. Auf diese Weise ist der Sulfatzerfall in dem ersten NOₓ-Speicherkatalysator 18 zunächst stark verlangsamt.

Zum anderen kann ein Umschalten in einen fetten Arbeitsmodus auf sehr niedrige Lambdawerte (0,65 bis 0,9) erfolgen, ebenfalls bis der zweite NOₓ-Speicherkatalysator 20 vollständig mit sauerstoffarmen Abgas durchströmt ist. Unter dieser stark reduzierenden Atmosphäre wird das Sulfat überwiegend zu H₂S reduziert. Da dieser Prozeß jedoch deutlich langsamer als die Bildung des SO₂ abläuft, ist innerhalb dieses Zeitraumes bereits der zweite NOₓ-Speicherkatalysator 20 unter fetter Atmosphäre.

Eine Erfassung der Konzentration ausgewählter Gaskomponenten vor und hinter dem NOₓ-Speicherkatalysator 20 erfolgt durch die Gassensorelemente 34, 36. Weiterhin können an ausgewählten Punkten durch die Fühler 38 die Temperaturen des Abgases erfaßt werden. Die erfaßten Signale werden in dem Motorsteuergerät 22 erfaßt und bewertet. Anschließend wird über das Motorsteuergerät 22 ein Arbeitsmodus der Verbrennungskraftmaschine 12 vorgegeben. Auf diese Weise können bestimmte Prozeduren, wie beispielsweise die Regeneration, die Entschwefelung, der Kaltstart oder der Abkühlungsprozeß, gesteuert und initiiert werden.

Durch eine Erfassung eines Verhältnisses oder der Absolutwerte der NOₓ-Konzentration vor und nach dem NOₓ-Speicherkatalysator 20 mittels der Gassensorelemente 34, 36 kann dessen Effizienz überwacht werden, und beim Unterschreiten eines applizierbaren Sollwertes kann dann die Entschwefelung initiiert werden. Vorteilhafterweise werden beide NOₓ-Speicherkatalysatoren 18, 20 gleichzeitig entschwefelt, um einen Kraftstoffverbrauch möglichst niedrig zu halten. Dafür werden in den NOₓ-Speicherkatalysatoren 18, 20 solche NOₓ-Absorber eingesetzt, deren Entschwefelungstemperatur sich entsprechend einem Temperaturgradienten zwischen dem NOₓ-Speicherkatalysator 18 und dem NOₓ-Speicherkatalysator 20 während der Entschwefelung unterscheidet. Zusätzlich wird eine genaue Abstimmung einer Entschwefelungscharakteristik der beiden NOₓ-Speicherkatalysatoren 18, 20 durch eine entsprechend abweichende Washcoat-Zusammensetzung oder Art, Menge beziehungsweise Dispersion der Edelmetallkomponenten oder die Aufbringung der Washcoat-, Edelmetall-, NOₓ-Speicher- und Zuschlagskomponenten auf den Träger 50 beeinflußt.

## Patentansprüche

1. Anordnung zur Reinigung eines Abgases einer Verbrennungskraftmaschine (12), insbesondere von Kraftfahrzeugen, mit einem in einem Abgaskanal (16) angeordneten Katalysatorsystem (10) zur Reduzierung eines Stickoxid(NOₓ)-Anteils des Abgases, wobei das Katalysatorsystem (10) im Strömungszug des Abgases einen ersten NOₓ-Speicherkatalysator (18) und beabstandet zu diesem einen zweiten NOₓ-Speicherkatalysator (20) umfasst und der zweite NOₓ-Speicherkatalysator (20) 300 bis 1500 mm stromab des ersten NOₓ-Speicherkatalysators (18) angeordnet ist, **dadurch gekennzeichnet, dass** der erste NOₓ-Speicherkatalysator (18) und der zweite NOₓ-Speicherkatalysator (20) verschiedenartig ausgelegt sind, und der zweite NOₓ-Speicherkatalysator (20) eine niedrigere Desorptionstemperatur für SO₂ und/oder einen niedrigeren aktiven Temperaturbereich als der erste NOₓ-Speicherkatalysator (18) besitzt.

2. Anordnung nach Anspruch 1, **dadurch gekennzeichnet, daß** das Katalysatorsystem (10) einen Vorkatalysator (32), vorzugsweise einen 3-Wege-Katalysator, umfaßt, der zwischen der Verbrennungskraftmaschine (12) und dem ersten NOₓ-Speicherkatalysator (18) angeordnet ist.

3. Anordnung nach einem der vorhergehenden Ansprüche, **dadurch gekennzeichnet, daß** das Katalysatorsystem (10) ein Gassensorelement (30), das unmittelbar nach der Verbrennungskraftmaschine (12) angeordnet ist, umfaßt.

4. Anordnung nach Anspruch 3, **dadurch gekennzeichnet, daß** das Katalysatorsystem (10) ein Gassensorelement (34) zwischen den NOₓ-Speicherkatalysatoren (18, 20) und/oder ein Gassensorelement (36) hinter dem NOₓ-Speicherkatalysator (18, 20) umfaßt.

5. Anordnung nach Anspruch 3 und 4, **dadurch gekennzeichnet, daß** die Gassensorelemente (30, 34, 36) Lambda-Sonden und/oder NOₓ-Sensoren sind.

6. Anordnung nach einem der vorhergehenden Ansprüche, **dadurch gekennzeichnet, daß** das Katalysatorsystem (10) Temperaturfühler (38) zwischen der Verbrennungskraftmaschine (12) und dem ersten NOₓ-Speicherkatalysator (18) und/oder zwischen den NOₓ-Speicherkatalysatoren (18, 20) und/oder hinter dem NOₓ-Speicherkatalysator (20) umfaßt.

7. Anordnung nach Anspruch 6, **dadurch gekennzeichnet, daß** der zweite NOₓ-Speicherkatalysator (20) eine niedrigere Desorptionstemperatur für SO₂ und/oder einen niedrigeren aktiven Temperaturbereich als der erste NOₓ-Speicherkatalysator (18) besitzt.

8. Anordnung nach einem der vorhergehenden Ansprüche, **dadurch gekennzeichnet, daß** der zweite NOₓ-Speicherkatalysator (20) 300 bis 1500 mm stromab des ersten NOₓ-Speicherkatalysators (18) beabstandet ist.

9. Anordnung nach einem der vorhergehenden Ansprüche, **dadurch gekennzeichnet, daß** der erste NOₓ-Speicherkatalysator (18) von dem Vorkatalysator (32) 250 bis 1000 mm beabstandet ist.

10. Verfahren zur Reinigung eines Abgases einer Verbrennungskraftmaschine (12), insbesondere von Kraftfahrzeugen, indem das Abgas über ein in einem Abgaskanal (16) angeordnetes Katalysatorsystem (10) gemäß einem der Ansprüche 1 bis 9 geführt wird, **dadurch gekennzeichnet, dass** NOₓ in einem mageren Arbeitsmodus der Verbrennungskraftmaschine (12) in dem ersten NOₓ-Speicherkatalysator (18) und/oder dem zweiten NOₓ-Speicherkatalysator (20) absorbiert wird und nach Überschreiten einer NOₓ-Desorptionstemperatur am ersten NOₓ-Speicherkatalysator (18) und einer NOₓ-Desorptionstemperatur am zweiten NOₓ-Speicherkatalysator (20) oder nach Überschreiten eines Speichervolumens für NOₓ an dem ersten NOₓ-Speicherkatalysator (18) und/oder eines Speichervolumens für NOₓ an dem zweiten NOₓ-Speicherkatalysator (20) die Verbrennungskraftmaschine (12) unter einem fetten Arbeitsmodus betrieben wird.

11. Verfahren nach Anspruch 10, **dadurch gekennzeichnet, daß** bei einer Überführung der Verbrennungskraftmaschine (12) von dem mageren Arbeitsmodus in den fetten Arbeitsmodus zunächst auf einen Lambdawert von 0,985 bis 0,995 angefettet wird, bis der zweite NOₓ-Speicherkatalysator (20) unter fetter Atmosphäre ist.

12. Verfahren nach Anspruch 10, **dadurch gekennzeichnet, daß** bei einer Überführung der Verbrennungskraftmaschine (12) von dem mageren Arbeitsmodus in den fetten Arbeitsmodus zunächst auf einen Lambdawert von 0,65 bis 0,9 angefettet wird, bis der zweite NOₓ-Speicherkatalysator (20) unter fetter Atmosphäre ist.

13. Verfahren nach Anspruch 10, **dadurch gekennzeichnet, daß** eine Entschwefelung des zweiten NOₓ-Speicherkatalysators (20) gleichzeitig mit einer Entschwefelung des ersten NOₓ-Speicherkatalysators (18) durchgeführt wird.

14. Verfahren nach Anspruch 13, **dadurch gekennzeichnet, daß** eine NOₓ-Konzentration vor und hinter dem NOₓ-Speicherkatalysator (20) durch die Gassensorelemente (34, 36) erfaßt wird und in Abhängigkeit vom Absolutwert einer der beiden NOₓ-Konzentrationen oder von einem applizierbaren Verhältnis der beiden NOₓ-Konzentrationen (Sollwert) die Entschwefelung initiiert wird.

## Claims

1. Arrangement for cleaning an exhaust gas of a combustion engine (12), especially in motor vehicles, with a catalyst system (10) arranged in an exhaust gas duct (16) to reduce a nitrogen oxide (NOₓ) content of the exhaust gas, wherein the catalyst system (10) in the flow pathway of the exhaust gas comprises a first NOₓ storage catalyst (18) and, at a distance from the latter, a second NOₓ storage catalyst (20), and wherein the second NOₓ storage catalyst (20) is arranged 300 to 1500 mm downstream of the first NOₓ storage catalyst (18), **characterised in that** the first NOₓ storage catalyst (18) and the second NOₓ storage catalyst (20) are designed in a different manner from one another, and the second NOₓ storage catalyst (20) provides a lower desorption temperature for SO₂ and/or a lower active temperature range than the first NOₓ storage catalyst (18).

2. Arrangement according to claim 1, **characterised in that** the catalyst system (10) comprises a preliminary catalyst (32), preferably at 3-way catalyst, which is arranged between the combustion engine (12) and the first NOₓ storage catalyst (18).

3. Arrangement according to any one of the preceding claims, **characterised in that** the catalyst system (10) comprises a gas sensor element (30), which is arranged directly after the combustion engine (12).

4. Arrangement according to claim 3, **characterised in that** the catalyst system (10) comprises a gas sensor element (34) between the NOₓ storage catalysts (18, 20) and/or a gas sensor element (36) after the NOₓ storage catalyst (18, 20).

5. Arrangement according to claim 3 and 4, **characterised in that** the gas sensor elements (30, 34, 36) are lambda probes and/or NOₓ-sensors.

6. Arrangement according to any one of the preceding claims, **characterised in that** the catalyst system (10) provides temperature detectors (38) between the combustion engine (12) and the first NOₓ storage catalyst (18) and/or between the NOₓ storage catalyst (18, 20) and/or after the NOₓ storage catalyst (20).

7. Arrangement according to claim 6, **characterised in that** the second NOₓ storage catalyst (20) provides a lower desorption temperature for SO₂ and/or a lower active temperature range than the first NOₓ storage catalyst (18).

8. Arrangement according to any one of the preceding claims, **characterised in that** the second NOₓ storage catalyst (20) is located at a distance of 300 to 1500 mm downstream of the first NOₓ storage catalyst (18).

9. Arrangement according to any one of the preceding claims, **characterised in that** the first NOₓ storage catalyst (18) is located at a distance of 250 to 1000 mm from the preliminary catalyst (32).

10. Process for cleaning an exhaust gas of a combustion engine (12), especially in motor vehicles, wherein the exhaust gas is passed over a catalyst system (10) according to any one of claims 1 to 9 arranged in an exhaust gas duct (16), **characterised in that** in a lean operating mode of the combustion engine (12), NOₓ is absorbed in the first NOₓ storage catalyst (18) and/or in the second NOₓ storage catalyst (20), and that the combustion engine (12) is operated in a rich operating mode after an NOₓ desorption temperature is exceeded in the first NOₓ storage catalyst (18) and after an NOₓ desorption temperature is exceeded in the second NOₓ storage catalyst (20), or after a storage volume for NOₓ is exceeded in the first NOₓ storage catalyst (18) and/or a storage volume for NOₓ is exceeded in the second NOₓ storage catalyst (20).

11. Process according to claim 10, **characterised in that** when the combustion engine (12) is transferred from the lean operating mode to the rich operating mode, the mixture is initially enriched from a lambda value of 0.985 to 0.995, until the second NOₓ storage catalyst (20) is under a rich atmosphere.

12. Process according to claim 10, **characterised in that** when the combustion engine is transferred from the lean operating mode to the rich operating mode, the mixture is initially enriched from a lambda value of 0.65 to 0.9, until the second NOₓ storage catalyst (20) is under a rich atmosphere.

13. Process according to claim 10, **characterised in that** a desulfuration of the second NOₓ storage catalyst (20) is implemented at the same time as a desulfuration of the first NOₓ storage catalyst (18).

14. Process according to claim 13, **characterised in that** an NOₓ concentration before and after the NOₓ storage catalyst (20) is registered by the gas sensor elements (34, 36) and, the desulfuration is initiated in dependence upon the absolute value of one of the two NOₓ concentrations or of an applicable ratio of the two NOₓ concentrations (target value).

## Revendications

1. Installation pour purifier un gaz d'échappement issu d'un moteur à combustion interne (12), en particulier de véhicules automobiles, comportant un système de catalyseur (10) disposé dans un canal d'échappement (16) et destiné à réduire une fraction d'oxydes d'azote (NOₓ) du gaz d'échappement, le système de catalyseur (10) comprenant dans la direction d'écoulement du gaz d'échappement un premier catalyseur de stockage de NOₓ (18) et, selon un écart par rapport à celui-ci, un second catalyseur de stockage de NOₓ (20), et le second catalyseur de stockage de NOₓ (20) étant disposé à 300 à 1 500 mm en aval du premier catalyseur de stockage de NOₓ (18), **caractérisée en ce que** le premier catalyseur de stockage de NOₓ (18) et le second catalyseur de stockage de NOₓ (20) sont conçus différemment, et que le second catalyseur de stockage de NOₓ (20) possède une plus faible température de désorption pour SO₂ et/ou une gamme de températures actives plus faible que le premier catalyseur de stockage de NOₓ (18).

2. Installation selon la revendication 1, **caractérisée en ce que** le système de catalyseur (10) comporte un pré-catalyseur (32), de préférence un catalyseur à trois voies, qui est disposé entre le moteur à combustion interne (12) et le premier catalyseur de stockage de NOₓ (18).

3. Installation selon l'une des revendications précédentes, **caractérisée en ce que** le système de catalyseur (10) comporte un élément capteur de gaz (30) qui est disposé directement après le moteur à combustion interne (12).

4. Installation selon la revendication 3, **caractérisée en ce que** le système de catalyseur (10) comporte un élément capteur de gaz (34) entre les catalyseurs de stockage de NOₓ (18, 20) et/ou un élément capteur de gaz (36) derrière le catalyseur de stockage de NOₓ (18, 20).

5. Installation selon la revendication 3 ou 4, **caractérisée en ce que** les éléments capteurs de gaz (30, 34, 36) sont des sondes lambda et/ou des capteurs de NOₓ.

6. Installation selon l'une des revendications précédentes, **caractérisée en ce que** le système de catalyseur (10) comprend des palpeurs de température (38) entre le moteur à combustion interne (12) et le premier catalyseur de stockage de NOₓ (18) et/ou entre les catalyseurs de stockage de NOₓ (18, 20) et/ou derrière le catalyseur de stockage de NOₓ (20).

7. Installation selon la revendication 6, **caractérisée en ce que** le second catalyseur de stockage de NOₓ (20) possède une température plus faible de désorption pour SO₂ et/ou une gamme de températures actives plus faible que le premier catalyseur de stockage de NOₓ (18).

8. Installation selon l'une des revendications précédentes, **caractérisée en ce que** le second catalyseur de stockage de NOₓ (20) est écarté de 300 à 1 500 mm en aval du premier catalyseur de stockage de NOₓ (18).

9. Installation selon l'une des revendications précédentes, **caractérisée en ce que** le premier catalyseur de stockage de NOₓ (18) est écarté de 250 à 1 000 mm du pré-catalyseur (32).

10. Procédé de purification d'un gaz d'échappement issu d'un moteur à combustion interne (12), en particulier de véhicules automobiles, dans lequel le gaz d'échappement est amené par un système de catalyseur (10) selon l'une des revendications 1 à 9 disposé dans un canal d'échappement (16), **caractérisé en ce que** le NOx est absorbé, dans un mode de service avec mélange pauvre du moteur à combustion interne (12,) dans le premier catalyseur de stockage de NOₓ (18) et/ou dans le second catalyseur de stockage de NOₓ (20) et, après dépassement d'une température de désorption du NOx au niveau du premier catalyseur de stockage de NOₓ (18) et une température de désorption du NOₓ au niveau du second catalyseur de stockage de NOₓ (20), ou après dépassement d'un volume de stockage du NOₓ au niveau du premier catalyseur de stockage de NOₓ (18) et/ou d'un volume de stockage du NOₓ au niveau du second catalyseur de stockage de NOₓ (20), le moteur à combustion interne (12) est exploité selon un mode de service avec enrichissement du mélange.

11. Procédé selon la revendication 10, **caractérisé en ce que**, lors d'une transition du moteur à combustion interne (12) d'un mode de service avec mélange pauvre vers le mode de service avec enrichissement du mélange, l'enrichissement est d'abord réalisé selon une valeur lambda comprise entre 0,985 et 0,995, jusqu'à ce que le second catalyseur de stockage de NOₓ (20) se trouve sous atmosphère enrichie.

12. Procédé selon la revendication 10, **caractérisé en ce que**, lors d'une transition du moteur à combustion interne (12) du mode de service avec mélange pauvre vers le mode de service avec enrichissement du mélange, l'enrichissement est d'abord réalisé selon une valeur lambda comprise entre 0,65 et 0,9, jusqu'à ce que le second catalyseur de stockage de NOₓ (20) se trouve sous atmosphère enrichie.

13. Procédé selon la revendication 10, **caractérisé en ce qu'**une désulfuration du second catalyseur de stockage de NOₓ (20) est réalisée en même temps qu'une désulfuration du premier catalyseur de stockage de NOₓ (18).

14. Procédé selon la revendication 13, **caractérisé en ce qu'**une concentration en NOₓ est captée avant et après le catalyseur de stockage de NOₓ (20) par les éléments capteurs de gaz (34, 36) et **en ce qu'**on initialise la désulfuration en fonction de la valeur absolue d'une des deux concentrations de NOₓ ou d'un rapport applicable entre les deux concentrations de NOₓ (valeur de consigne).
